# EUROPEAN PATENT APPLICATION

(11) **EP 1 213 918 A2**
(43) Date of publication of application: **12.06.2002**
(21) Application number: 01129009.5
(22) Date of filing: 06.12.2001
(51) Int. Cl.: H04N 5/445

(54) **Method and device for storing electronic program guide**

(30) Priority: 08.12.2000 US 733185
(71) Applicant: NEC CORPORATION, Tokyo (JP)
(72) Inventor: Bhatt, Bhavesh B., New Jersey 08823 (US)
(74) Representative: Glawe, Delfs, Moll & Partner

(57) **Abstract**

The present invention partitions the EPG, allowing storage of portions of the EPG in separate memory components. Based on viewer preferences, the invention identifies preferred portions of the EPG and stores these portions in the more rapid memory. The more rapid memory can be electronic, or RAM. The invention partitions the EPG into at least three portions: the channel portion, the schedule portion and the program portion. The invention further divides each portion into a subportion (or submodule) including only preferred data. The invention updates the information stored in the memory module having the most rapid access. The invention also detects infrequently accessed portions of the EPG stored in the most rapid memory and moves the infrequently accessed portions to memory with slower access. The memory with slower access can be magnetic, or a hard drive. Storing only preferred portions of a program guide in memory having rapid access maintains the speed of access to the preferred portions of the EPG and increases the amount of available memory with rapid access.

## Description

### BACKGROUND OF THE INVENTION

### Field of the Invention

This invention relates to a process to store an electronic program guide in a television set-top receiver.

### Description of the Related Art

Consumers have several options to access television programming. Conventional broadcasts are available in most areas, but random electronic signals interfere with reception of these analog signals. The Federal Communication Commission has ruled that analog signals may not be broadcast after 2006. Many commercial service providers broadcast a wider selection of programming than conventional analog broadcasters. But commercial cable service providers are limited to a geographic areas with sufficient population to support the required investment in infrastructure. Satellite transmission of signals provides numerous channels, hence selection, over a wide geographic area.

Satellite and cable transmissions typically incorporate more channels than a conventional television will receive. Digital signals are broadcast in Moving Picture Expert Group (MPEG) format that cannot be displayed without being decoded. The service provider typically supplies and installs a set-top receiver to decode the MPEG signal and allow access all to channels and services made available by the provider.

For example, the service provider may encode certain signals, or programs, and make these selected programs available only on a pay-per-showing agreement. The set-top receiver incorporates a feature allowing the consumer to view an encoded program. After the consumer agrees to pay for the encoded program, the set-top receiver transmits the request, receives the coded program and decodes the signal.

In addition to pay-per-view events, programming may include sports events, musical events, live music and network broadcasts. A service provider's set-top receiver will download a program of these events (electronic program guide or EPG) and make this guide available to the viewer. The EPG will list the date, channel and time for each upcoming event.

A typical set-top receiver has a central processing unit (CPU) and a return channel. Recently manufactured set-top receivers have more powerful CPUs, faster return channels, and are capable of supporting interactive multimedia applications. Newer set-top receivers have more memory and typically include a hard drive.

The CPU performs various functions, including initializing the hardware components, retrieving data and instructions from memory and running various programs, Many set-top receivers depend on internal random access memory (RAM) as a temporary storage for instructions transmitted to the set-top receiver by the CPU. RAM is generally, one of two types, dynamic random access memory (DRAM) and static random access memory (SRAM).

An EPG is downloaded at least once per day, typically at midnight. Service providers can also update an EPG on an hourly basis, or provide hourly updates of selected EPG information. Information contained in an EPG assists the viewer in searching for preferences and allows the viewer to make an informed choice. For example, if a viewer prefers John Wayne movies, the EPG will provide information regarding the dates, times and channels of upcoming John Wayne movies. As EPG functions expand, memory requirements increase.

An EPG will typically be stored in the set-top receiver in DRAM. DRAM is also used by other components of the set-top receiver such as the CPU, the decoder and graphics functions. Access to information stored in DRAM is rapid when compared to information stored on a hard disk where access to the stored information is sequential, rather than random. However, DRAM is more expensive to manufacture and install. Consequently, a need exists to reduce the amount of DRAM necessary to store an EPG in a set-top receiver while maintaining the speed of access.

### SUMMARY OF THE INVENTION

The present invention partitions the EPG, allowing storage of portions of the EPG in separate memory components. Based on viewer preferences, the invention identifies preferred portions of the EPG and stores these portions in the more rapid memory, The more rapid memory can be electronic, or RAM. The invention partitions the EPG into at least three portions: the channel portion, the schedule portion and the program portion. The invention further divides each portion into a subportion (or submodule) including only preferred data. The invention updates the information stored in the memory module having the most rapid access. The invention also detects infrequently accessed portions of the EPG stored in the most rapid memory and moves the infrequently accessed portions to memory with slower access. The memory with slower access can be magnetic, or a hard drive. Storing only preferred portions of a program guide in memory having rapid access maintains the speed of access to the preferred portions of the EPG and increases the amount of available memory with rapid access.

The foregoing is a summary and thus contains, by necessity, simplifications, generalizations and omissions of detail; consequently, those skilled in the art will appreciate that the summary is illustrative only and is not intended to be in any way limiting.

### BRIEF DESCRIPTION OF THE DRAWINGS

The present invention may be better understood, and its numerous objects, features, and advantages made apparent to those skilled in the art by referencing the accompanying drawings, in which the use of the same reference symbols in different drawings indicates similar or identical items and in which:
FIG. 1 is a block diagram showing the components of a typical set-top receiver.
FIG. 2 is a block diagram showing the related art of storing an EPG.
FIG. 3 is a block diagram of the present invention showing an EPG partitioned and stored in separate memory modules.
FIG. 4 is a flow diagram showing updating the information stored in the first memory device with information moved from the second memory device.

The use of the same reference symbols in different drawings indicates similar or identical items.

### DETAILED DESCRIPTION

The following is intended to provide a detailed description of an example of the invention and should not be taken to be limiting of the invention itself. Any number of variations may fall within the scope of the invention, which is defined in the claims following the description.

The present invention is a process to partition and store an EPG. The invention periodically downloads an EPG from a service provider. The invention is a mechanism to identify the preferred portions of the EPG and to store those portions in a segment of memory having rapid access. The memory used to stored the preferred portions of the EPG can be electronic or DRAM. The remainder of the EPG is stored in a separate memory segment having less rapid access. The memory segment used to store the remainder of the EPG can be magnetic or a hard disk.

A mechanism is provided that updates portions of the EPG stored in the memory module with the most rapid access. Based on viewer queries, the mechanism detects and identifies the portions of the EPG containing frequently accessed, or preferred, data. Preferred portions of the EPG stored in memory with more rapid access are moved to memory with slower access, to increase the available memory to store data preferred by the user. Similarly, portions of the EPG containing preferred data are moved to memory having more rapid access from memory having slower access.

Set-top receivers typically have several interfaces, including: high-speed multimedia interfaces, modems, RS 232 ports, TV/VCR interfaces, remote controls and IR blasters. Set-top receivers communicate with televisions and video recorders through output ports that typically are specific to individual vendor's products. Highspeed multimedia interfaces allow communication with devices such as camcorders and Digital Video Devices (DVDs).

A modem allows return communication with the service provider and facilitates interactive services. Modems are used to send requests to servers on the Internet, enable users to send email and other services such as video-on-demand. The Multimedia Cable Network System (MCNS) has developed a standard for communications by a modem over a cable network. The standard, called Data Over Cable System Interface Specification (DOCSIS) allows Internet services to be offered to PC users through a digital television modern.

A remote control or IR blaster may be used to change channels on the set-top receiver. A remote control may also execute an EPG navigational system and start an installation menu for configuring the set-top receiver. An IR blaster allows a user to control a television and set-top receiver from rooms other than the room in which the television and set-top receiver are located. An IR blaster transmits a signal compatible with a remote control connects directly to a set-top receiver.

A set-top receiver incorporates an operating system (OS) which allows the unit to function. Operating systems allocate and control the use of the CPU, control data transfers, manage computer memory, control communications between computers and manage file systems and data storage. The kernel layer of an operating system is stored in read only memory ("ROM") and will be loaded first when the system is switched on. The kernel allows a set-top receiver to simultaneously execute different sections of a program. A layer identified as a loader is also included in a set-top receiver. The loader allows the user to download programs built into the memory of the set-top receiver.

A typical OS also includes software drivers to control hardware peripherals. Finally, a set-top receiver operating system includes Application Program Interfaces (API's) specific to a set-top operating system environment. API's are necessary to write applications for a specific operating system. Both OS and the API are transparent to the user.

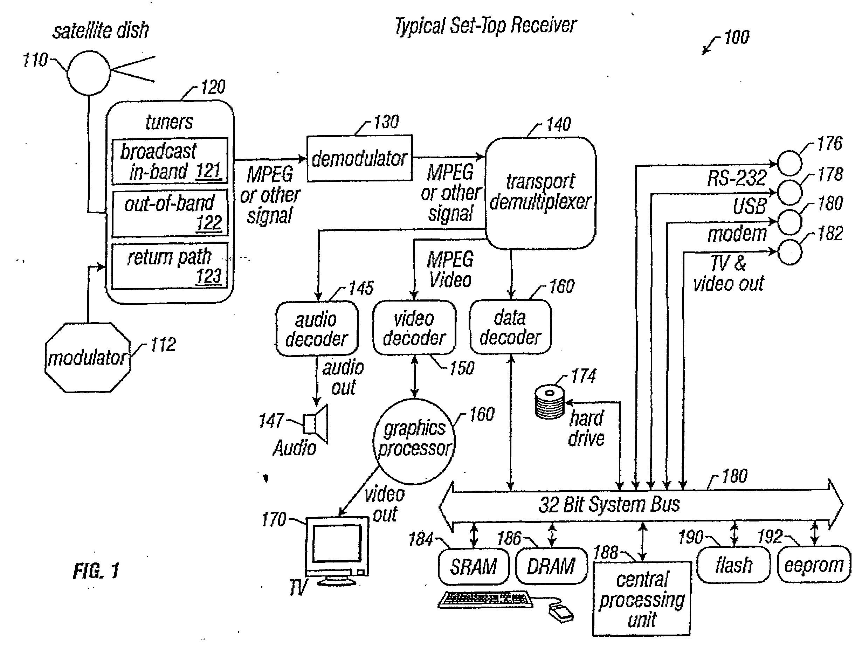

Fig. 1 is a block diagram illustrating an example architecture of a set-top receiver. In this example, satellite dish 110 receives a signal from the service provider. The signal is transmitted to tuner module 120 containing broadcast in-band tuner 121 and out-of-band tuner 122. Broadcast in-band tuner 121 isolates a channel from a multiplex of channels and converts the channel to baseband. Out-of-band tuner 122 is used to facilitate transfer of data between the service provider and the set-top receiver. Out-of-band tuner 122 is also used to provide consumers with interactive services. Tuner module 120 also contains return path 123, allowing the user to send data to the service provider. Modulator 112 converts the incoming signal to digital and delivers the modulated signal to return path 123. From tuner 120, the signal is conveyed in MPEG (or other format) to demodulator 130. Demodulator 130 converts the analog signal to a digital bit stream containing at least video and audio signals. Demodulator 130 transmits the signal to transport demultiplexer 140. Transport demultiplexer 140 conveys the signal to audio decoder 145, video decoder 150 and data decoder 160. Audio decoder 145 conveys the audio signal to speaker 147. Video decoder 150 transmits the signal to graphics processor 160 that sends the signal to monitor 170. Data decoder 160 sends the signal to a system bus, in this example 32 bit system bus 172. System bus 172 is electronically coupled to hard drive 174 and incorporates data ports, including RS-232 port 176, USB port 178, modem port 180 and television/video out port 182. System bus 172 is also coupled to SRAM 184, DRAM 186, FLASH memory 190 and EEPROM memory 192. Finally, system bus 180 is electronically coupled to CPU 188.

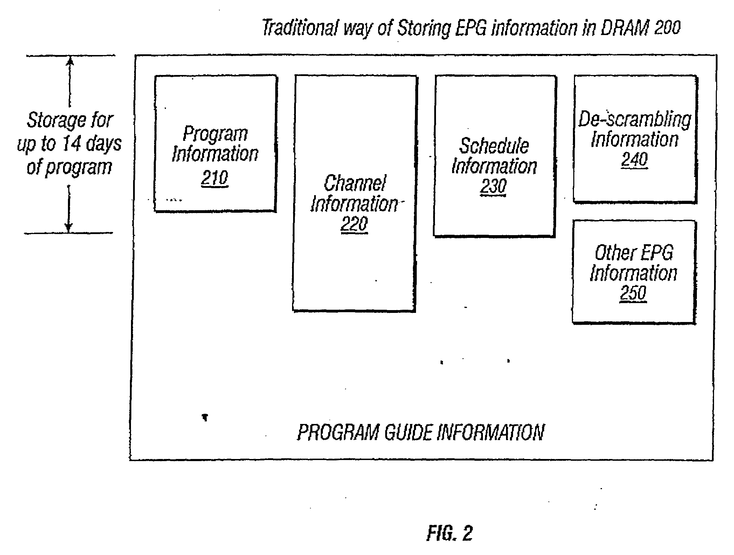

Figure 2 depicts storage of the complete EPG in DRAM. At least three modules are stored for up to 14 days of programming: program information 210, channel information 220 and schedule information 230. In addition, descrambling information 240 and other EPG information 250 may be stored.

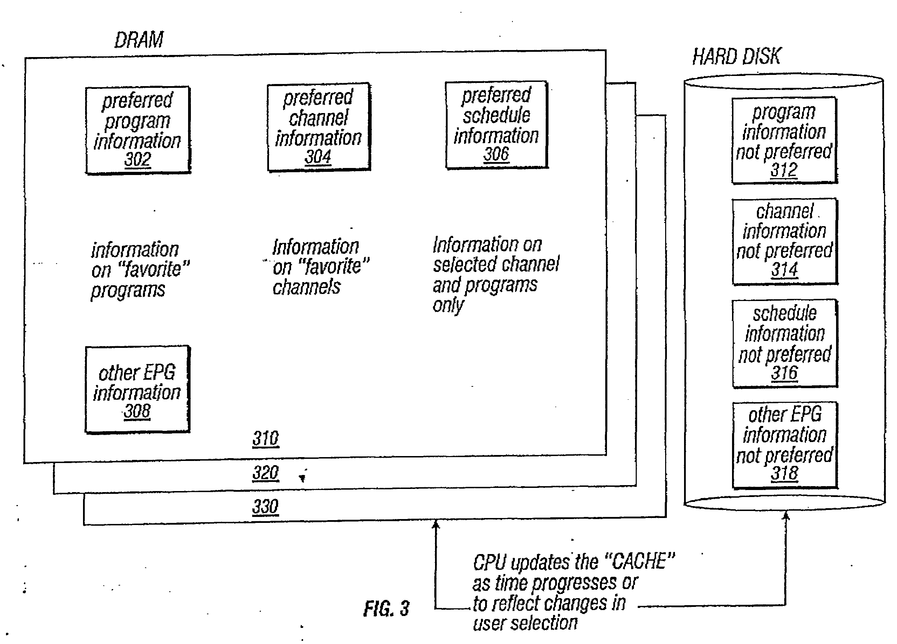

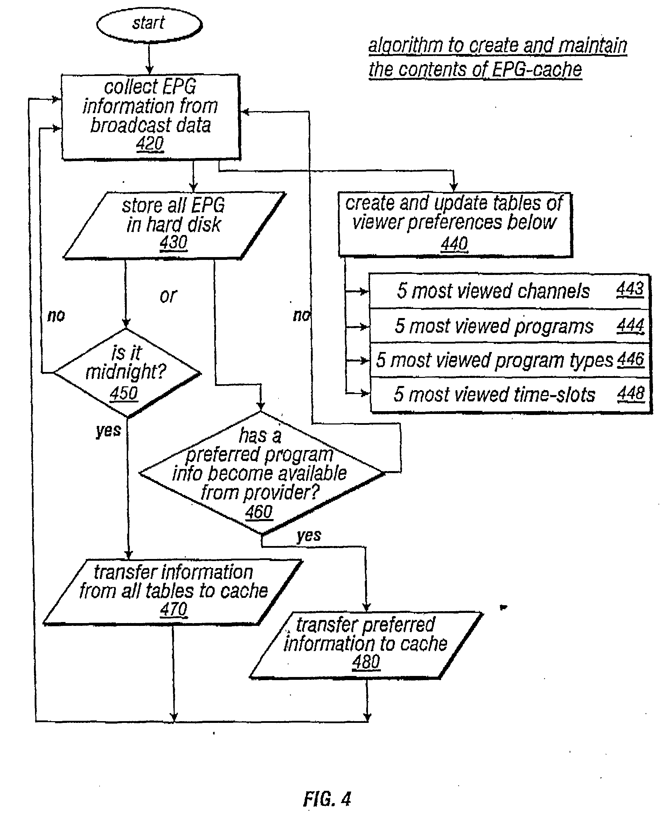

Figure 3 illustrates an embodiment of the present invention. Preferred program information 302, channel information 304 and schedule information 306 are stored in a rapid access memory module. This embodiment of the invention uses DRAM as the rapid access memory module and a hard drive as the separate memory module. The present invention also has the capacity to store other EPG information 308 with the preferred program information 302, channel information 304 and schedule information 306. Figure 3 depicts the remaining program information 312, channel information 314, schedule information 316 and other EPG information 318 stored on a second memory device. Figure 3 further depicts updates 320 and 330 of the preferred information as further illustrated in Figure 4.

Figure 4 depicts a selection algorithm to select and maintain the contents of the EPG in the separate memory components. Periodically, typically at midnight each day, EPG data is downloaded in event 420 from the signal transmitted by the service provider. The daily download of EPG information is initially stored in event 430 on the hard disk. In event 450, the algorithm searches the downloaded EPG for a match with programs, channels and schedules preferred by the individual user. In event 470, if the algorithm finds a match the algorithm stores the matching data on the rapidly accessed memory module. If the service provider transmits updated EPG during the day the algorithm also searches the updated information for a match, as described below.

Preferred programming 440 is determined from the following information entered by the user(s): five most frequently viewed channels 442, five most viewed programs 444, five most viewed program types 446 and the five most viewed time slots 448. The five most frequently viewed channels 442, five most viewed programs 444, five most viewed program types 446 and the five most viewed time slots 448 constitute preferred data. If the EPG is updated, the algorithm searches, in event 460, the updated information for a match with viewer preferences. If a match is found between upcoming programming and viewer preferences, the information stored in the most rapid access memory is adjusted, in event 480.

While particular embodiments of the present invention have been shown and described, it will be obvious to those skilled in the art that, based upon the teachings herein, changes and modifications may be made without departing from this invention and its broader aspects, and therefore, the appended claims are to encompass within their scope all such changes and modifications as are within the true spirit and scope of this invention. furthermore, it is to be understood that the invention is solely defined by the appended claims.

## Claims

1. A set-top receiver for storing an electronic program guide ("EPG"), the set-top receiver comprising:
a first memory device for storing a first portion of the EPG;
a second memory device for storing a second portion of the EPG;
means for dividing the electronic program guide into a first portion and a second portion; and
means for allocating the first portion to the first memory device and the second portion to the second memory device.

2. The set-top receiver as recited in claim 1, further comprising:
means to adjust the contents of the first portion of the EPG.

3. The set-top receiver as recited in claim 1, further comprising:
means to adjust the contents of the second portion of the EPG.

4. The set-top receiver as recited in claim 1, wherein the first memory is more rapidly accessed than the second memory.

5. The set-top receiver as recited in claim 1, wherein the first memory is an electronic memory.

6. The set-top receiver as recited in claim 5, wherein the first memory is a volatile memory.

7. The set-top receiver as recited in claim 1, wherein the second memory is a non-volatile memory.

8. The set-top receiver as recited in claim 7, wherein the second memory is a hard drive.

9. The set-top receiver as recited in claim 2, wherein the first portion of the EPG comprises preferred data.

10. A method for storing an EPG, comprising:
separating the EPG data into at least three modules, the three modules comprising a channel module, a schedule module and a program module.
determining the preferred data in the program module; and
creating a program submodule that comprises preferred data from the program module;
storing the program submodule on a second memory device.

11. The method as recited in claim 10, further comprising:
determining the preferred data in the program module;
creating a program submodule that comprises preferred data from the program module; and
storing the program submodule on a second memory device.

12. The method as recited in claim 10, further comprising:
determining preferred data in the channel module;
creating a schedule submodule that comprises preferred data from the channel module; and
storing the channel submodule on a second memory device.

13. The method as recited in claim 10, further comprising:
determining preferred data in the schedule module;
creating a schedule submodule that comprises preferred data from the schedule module; and
storing the schedule submodule on a second memory device.

14. The method as recited in claim 10, further comprising;
adjusting the information stored in the first memory device.

15. The method as recited in claim 14, wherein adjusting the information stored in the first memory device comprises:
monitoring the program submodule and identifying preferred data on the program submodule and moving the preferred data from the program submodule stored on the second memory device to the program module stored on the first memory device.

16. The method as recited in claim 15, wherein adjusting the information stored in the first memory device further comprises:
monitoring the channel submodule and identifying preferred data on the channel submodule and moving the preferred data from the channel submodule stored on the second memory device to the channel module stored on the first memory device; and
monitoring the schedule submodule and identifying preferred data on the schedule
submodule and moving the preferred data from the schedule submodule stored on the second memory device to the schedule module stored on the first memory device,

17. A set-top receiver, comprising;
a processor;
computer readable medium coupled to said processor;
a first memory;
a second memory;
an EPG comprising;
less frequently accessed data; and
more frequently accessed data wherein the more frequently accessed data comprises preferred data; and
computer code encoded in computer readable medium, wherein the computer
code is configured to cause the processor to:
identify preferred data stored in the second memory; and
move preferred data from the second memory to the first memory.

18. A computer program produced encoded in computer readable media, said computer program product comprising:
a first memory;
a second memory;
a first set of instructions, executable on a set-top receiver, wherein the first set of instructions is configured to determine preferred portions of an EPG stored in the second memory; and
a second set of instructions, executable on a set-top receiver; wherein the second set of instructions is configured to move the preferred data from the second memory to the first memory.

19. A method of using a television set-top receiver, comprising:
entering queries into a television set-top receiver, wherein the queries generate data wherein the data is stored in the set-top receiver and used to determine viewer preferences.

20. A method of using a television set-top receiver, comprising:
accessing preferred channels and programs as determined by previously entered queries.

21. A method of using a television set-top receiver, comprising:
viewing preferred channels and programs as determined by previously entered queries.
